# FASCICULE DE BREVET EUROPEEN

(11) **EP 1 585 001 B1**
(45) Date de publication et mention de la délivrance du brevet: **13.09.2006**
(21) Numéro de dépôt: 05290577.5
(22) Date de dépôt: 16.03.2005
(51) Int. Cl.: G05D 1/06

(54) **Procédé pour assurer la sécurité d'un aéronef volant horizontalement à faible vitesse**
Verfahren zur Sicherung eines horizontal mit Niedriggeschwindigkeit fliegenden Flugzeuges
Process for ensuring the security of an aircraft flying horizontally at low speed

(30) Priorité: 09.04.2004 FR 0403762
(43) Date de publication de la demande: 12.10.2005
(73) Titulaire: AIRBUS France, 31060 Toulouse (FR)
(72) Inventeur: Chardon, Stéphane, 31500 Toulouse (FR)
(74) Mandataire: Bonnetat, Christian

(56) Documents cités:
- FR-A- 2 624 964
- FR-A- 2 688 077
- FR-A- 2 747 204

## Description

La présente invention concerne un procédé pour assurer la sécurité d'un aéronef volant horizontalement à une faible vitesse, voisine de la vitesse minimale VLS (Lower Selectable Speed en anglais) autorisée pour la configuration actuelle des surfaces aérodynamiques mobiles (becs de bord d'attaque et/ou volets de bord de fuite) de ses ailes.

Le document FR2747204 divulgue un procédé pour assurer la sécurité d'un aéronef volant horizontalement, notamment à une vitesse faible voisine de la vitesse minimale autorisée pour la configuration actuelle des surfaces aérodynamiques mobiles de ses ailes, la commande en tangage dudit aéronef étant obtenue par action du pilote sur les gouvernes de profondeur articulées à l'empennage horizontal dudit aéronef.

On sait que, dans une telle phase de vol stabilisé à faible vitesse, la portance procurée à l'aéronef par ses ailes et par lesdites surfaces aérodynamiques mobiles doit être élevée, de sorte que cette portance élevée (éventuellement renforcée par le soufflage des ailes par les hélices des moteurs et éventuellement aidée par la force de traction de ces derniers) engendre un moment piqueur élevé par rapport au centre de gravité de l'aéronef.

Pour équilibrer l'aéronef, le pilote braque à cabrer les gouvernes de profondeur dudit aéronef, de façon que celles-ci engendrent, par rapport audit centre de gravité de l'aéronef, un moment cabreur apte à contrecarrer ledit moment piqueur élevé.

Cependant, si pendant une telle phase de vol stabilisé à faible vitesse, l'aéronef doit brusquement éviter un autre aéronef par le bas pour échapper à une collision, le pilote commande brutalement les gouvernes de profondeur à plein piquer. Ensuite, après l'évitement, les gouvernes de profondeur sont de nouveau ramenées, depuis leur position à plein piquer, jusqu'à une position à cabrer permettant à l'aéronef d'effectuer une ressource.

On comprendra aisément que la réussite d'une telle manoeuvre exige un dimensionnement important desdites gouvernes de profondeur et de leurs moyens d'actionnement, généralement hydrauliques.

La présente invention a pour objet de remédier à cet inconvénient.

A cette fin, selon l'invention, le procédé pour assurer la sécurité d'un aéronef volant horizontalement à une faible vitesse, voisine de la vitesse minimale VLS autorisée pour la configuration actuelle des surfaces aérodynamiques mobiles de ses ailes, la commande en tangage dudit aéronef étant obtenue de façon usuelle par action du pilote sur les gouvernes de profondeur articulées à l'empennage horizontal dudit aéronef, est remarquable en ce que :
- on prédétermine un seuil inférieur de vitesse pour l'aéronef ;
- on mesure la vitesse actuelle dudit aéronef ; et
- on compare ladite vitesse actuelle audit seuil et, lorsque ladite vitesse actuelle atteint en décroissant ledit seuil, on limite la commande à piquer dudit aéronef à un facteur de charge supérieur à Og.

La présente invention est basée sur l'observation que, notamment à cause de l'inertie de l'aéronef, il n'est pas nécessaire, pour réussir la manoeuvre d'évitement rappelée ci-dessus, d'atteindre des facteurs de charge voisins de Og (pleine autorité à piquer), mais qu'il suffit de commander des facteurs de charge plus grands, par exemple compris entre 0,3g et 0,7g, de préférence 0,5g.

Grâce à une telle limitation de facteur de charge, on peut ainsi éviter de surdimensionner les gouvernes de profondeur et leurs moyens d'actionnement.

Par ailleurs, on sait que certains aéronefs comportent un empennage horizontal stabilisateur, réglable en inclinaison. Un tel empennage horizontal réglable est, dans la technique, désigné par l'une ou l'autre des abréviations PHR (pour Plan Horizontal Réglable) ou THS (pour Trimmable Horizontal Stabiliser). Dans ce cas, les gouvernes de profondeur forment le bord de fuite dudit empennage horizontal réglable et sont articulées à celui-ci.

Un empennage horizontal réglable peut être braqué dans le sens à cabrer ou dans le sens à piquer et il est utilisé, entre autres applications, pour équilibrer l'aéronef en vol stabilisé (les gouvernes de profondeur étant généralement dans le prolongement aérodynamique dudit empennage horizontal réglable) en engendrant un moment cabreur contrecarrant le moment piqueur, dû principalement à la portance (comme rappelé ci-dessus).

Dans la phase de vol à faible vitesse concernée par la présente invention, ce moment cabreur d'équilibrage doit donc être élevé, de sorte que l'incidence locale sur ledit empennage horizontal réglable est fortement négative. Il en résulte que, pendant la manoeuvre d'évitement par le bas mentionnée ci-dessus, l'incidence locale dudit empennage horizontal réglable risque de dépasser l'incidence de décrochage de ce dernier, de sorte que, au moment où le pilote voudra arrêter la manoeuvre et commandera les gouvernes de profondeur à cabrer, l'empennage horizontal réglable pourra avoir perdu son efficacité : l'aéronef sera donc incapable d'amorcer la ressource et il peut en résulter la perte de l'aéronef. Là encore, à cause de la manoeuvre d'évitement mentionnée ci-dessus, le dimensionnement dudit empennage horizontal réglable doit être plus grand que cela est strictement nécessaire pour les autres phases de vol de l'aéronef.

Pour éviter un tel surdimensionnement, selon l'invention et en plus de la limitation du facteur de charge à piquer mentionnée ci-dessus, on bloque l'inclinaison à cabrer dudit empennage horizontal réglable à la valeur existant au moment où ladite vitesse actuelle de l'aéronef atteint en décroissant ledit seuil inférieur de vitesse.

Ainsi, pendant la phase de vol stabilisé à faible vitesse, l'équilibrage horizontal de l'aéronef met également en action les gouvernes de profondeur dans le sens à cabrer, dès que le seuil inférieur de vitesse est atteint. L'incidence locale sur l'empennage horizontal réglable est donc moins négative, de sorte qu'il existe une marge plus élevée au décrochage de ce dernier pendant la manoeuvre d'évitement.

Après blocage de l'inclinaison à cabrer dudit empennage horizontal réglable, il est avantageux que ce dernier puisse être librement commandé dans le sens à piquer, si nécessaire.

Avantageusement, ledit seuil inférieur de vitesse peut être choisi égal à ladite vitesse minimale VLS.

Les figures du dessin annexé feront bien comprendre comment l'invention peut être réalisée. Sur ces figures, des références identiques désignent des éléments semblables.
La figure 1 est une vue latérale, en vol, d'un avion auquel la présente invention peut s'appliquer.
La figure 2 est une vue en plan de l'avion de la figure 1.
La figure 3 est un schéma synoptique simplifié des commandes de l'empennage horizontal réglable et des gouvernes de profondeur de l'avion des figures 1 et 2.
La figure 4 est un diagramme schématique indiquant la variation du facteur de charge auquel l'avion des figures 1 et 2 est soumis en fonction de l'ordre de pilotage en tangage.
La figure 5 illustre les positions de l'empennage horizontal réglable et des gouvernes de profondeur en vol stabilisé usuel de l'avion des figures 1 et 2.
La figure 6 illustre les positions de l'empennage horizontal réglable et des gouvernes de profondeur en vol stabilisé selon l'invention, après atteinte du seuil inférieur de vitesse.

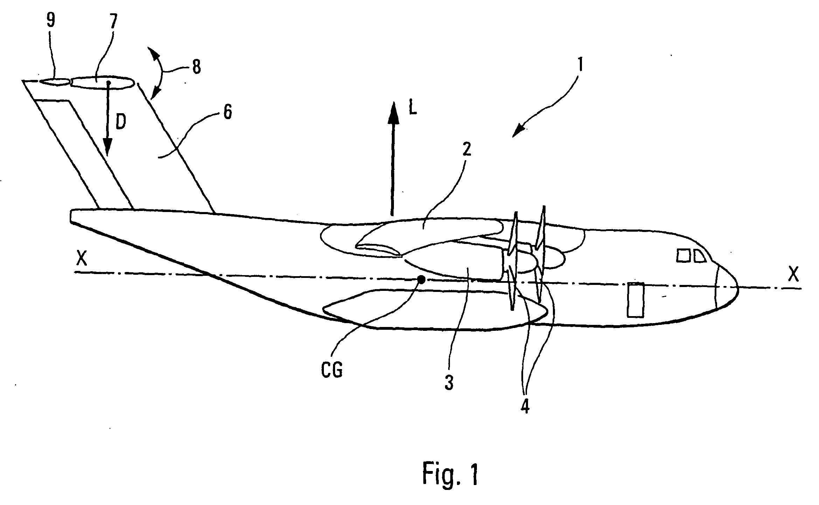

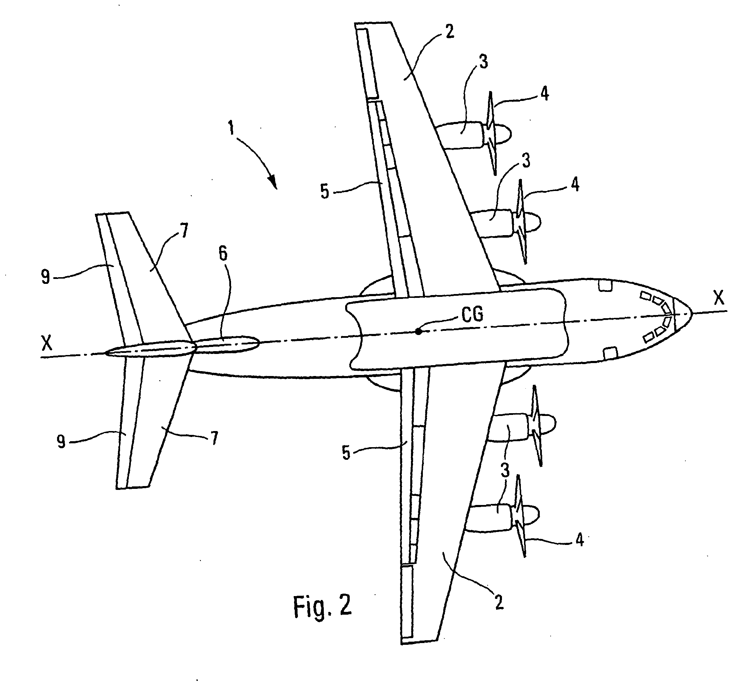

L'avion de transport 1, représenté schématiquement sur les figures 1 et 2, présente un axe longitudinal X-X et comporte deux ailes symétriques 2 portant chacune deux moteurs 3 à hélice 4. Les bords de fuite des ailes 2 sont pourvus de volets articulés 5.

A sa partie arrière, l'avion 1 est pourvu d'un empennage vertical 6 portant, à son extrémité supérieure, un empennage horizontal 7, réglable en inclinaison comme cela est illustré par la double flèche 8 de la figure 1. Le bord de fuite de l'empennage horizontal réglable 7 est constitué par des gouvernes de profondeur 9, articulées à ce dernier.

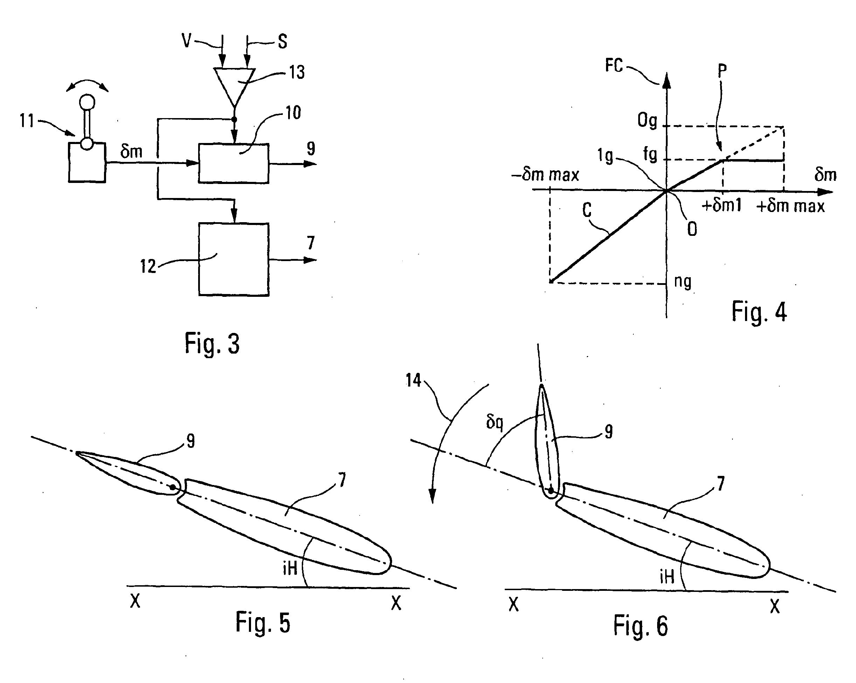

Comme cela est illustré schématiquement sur la figure 3, le braquage des gouvernes de profondeur 9 est commandé par un dispositif de commande 10 recevant un ordre de commande δm d'un système de manche 11, à la disposition du pilote de l'avion 1, tandis que le braquage de l'empennage horizontal réglable 7 est commandé par un calculateur de vol 12, qui, bien que cela ne soit représenté, reçoit également l'ordre de commande δm.

Le facteur de charge FC appliqué à l'avion en fonction de l'ordre de commande δm (voir la figure 4) comporte de façon usuelle une partie à cabrer C, pour laquelle le facteur de charge FC varie entre 1 g et ng (avec n de l'ordre de 2 ou 3) pour une variation de δm comprise entre 0 et un maximum -δmmax, et une partie à piquer P, pour laquelle ledit facteur de charge FC varie entre 1 g et Og pour une variation de δm comprise entre 0 et un maximum +δmmax. Sur la figure 4, la partie usuelle à piquer P est représentée partiellement en trait plein (du point 0,1 g au point +δm1, fg) et partiellement en pointillés (du point +δm1, fg au point +δmmax, Og).

En vol stabilisé, le moment piqueur exercé par la portance L des ailes 2, éventuellement renforcée par d'autres forces, par rapport au centre de gravité CG est équilibré par le moment cabreur engendré par la déportance D de l'empennage horizontal réglable 7 par rapport audit centre de gravité CG. Dans ce cas, comme cela est illustré sur la figure 5, ledit empennage horizontal réglable 7 est incliné à cabrer d'un angle iH par rapport à l'axe X-X et les gouvernes de profondeur 9 sont avantageusement en prolongement aérodynamique dudit empennage horizontal réglable 7.

Le dispositif de commande 10 comporte, en plus des éléments 10, 11 et 12 déjà décrits, un dispositif de comparaison 13 recevant la vitesse actuelle V de l'avion 1 et un seuil inférieur de vitesse S, par exemple égal à VLS. Bien entendu, le dispositif de comparaison 13, bien que représenté séparé du dispositif de commande 10 et du calculateur de vol 12, pourrait être incorporé dans l'un et/ou l'autre de ces deux derniers dispositifs. De même, il va de soi que le dispositif de commande 10 et le calculateur de vol 12 peuvent être regroupés dans un seul et même calculateur.

Tant que la vitesse actuelle V est supérieure au seuil S, le dispositif de comparaison 13 n'a aucun effet sur le dispositif de commande 10, ni sur le calculateur de vol 12 et l'empennage horizontal réglable 7 et les gouvernes de profondeur 9 se trouvent dans la position de la figure 5.

En revanche, dès que la vitesse actuelle V atteint en décroissant le seuil S, le dispositif de comparaison 13 :
- d'une part, par l'intermédiaire du calculateur de vol 12, bloque à cabrer l'empennage horizontal réglable 7, l'angle d'inclinaison iH à cabrer étant gelé à la valeur qu'il présentait à l'instant où la vitesse actuelle V est devenue égale au seuil S, de sorte qu'à partir de cet instant, l'équilibrage de l'avion 1 est assuré également par les gouvernes de profondeur 9 (comme cela est représenté sur la figure 6) qui aident à contrecarrer le moment piqueur dû à la portance L ; et
- d'autre part, par l'intermédiaire du dispositif de commande 10, limite le facteur de charge FC à piquer de l'avion 1 à une fraction f de g, avec f compris entre 0,3 et 0,7, par exemple égal à 0,5, de sorte que, comme le montre la figure 4, le facteur de charge FC est égal à fg entre l'ordre à piquer +δm1 (qui correspond à fg) et l'ordre à piquer maximal +δmmax. Ainsi, lorsque le pilote agira à plein piquer sur le système de manche 11 pour un évitement brusque par le bas, les gouvernes de profondeur pivoteront dans le sens à piquer --comme cela est symbolisé sur la figure 6 par la flèche 14-- en évitant d'imposer à l'avion 1 un facteur de charge nul (0g) ou proche de zéro.

Comme cela a été mentionné ci-dessus, grâce aux mesures qui viennent d'être décrites, on évite d'avoir à surdimensionner l'empennage horizontal réglable 7 et les gouvernes de profondeur 9 pour la seule manoeuvre d'évitement par le bas à faible vitesse.

## Revendications

1. Procédé pour assurer la sécurité d'un aéronef (1) volant horizontalement à une faible vitesse, voisine de la vitesse minimale VLS autorisée pour la configuration actuelle des surfaces aérodynamiques mobiles de ses ailes, la commande en tangage dudit aéronef (1) étant obtenue par action du pilote sur les gouvernes de profondeur (9) articulées à l'empennage horizontal (7) dudit aéronef,
**caractérisé en ce que** :
- on prédétermine un seuil inférieur de vitesse (S) pour l'aéronef ;
- on mesure la vitesse actuelle (V) dudit aéronef ; et
- on compare ladite vitesse actuelle (V) audit seuil (S) et, lorsque ladite vitesse actuelle (V) atteint en décroissant ledit seuil (S), on limite la commande à piquer dudit aéronef (1) à un facteur de charge (fg) supérieur à Og.

2. Procédé selon la revendication 1,
**caractérisé en ce que** le facteur de charge (fg) résultant de la limitation de commande à piquer est compris entre 0,3g et 0,7g.

3. Procédé selon la revendication 2,
**caractérisé en ce que** le facteur de charge (fg) résultant de la limitation de commande à piquer est de l'ordre de 0,5g.

4. Procédé selon l'une des revendications 1 à 3, pour un aéronef dans lequel ledit empennage horizontal est réglable en inclinaison,
**caractérisé en ce qu'**on bloque l'inclinaison à cabrer dudit empennage horizontal réglable à la valeur existant à l'instant où ladite vitesse actuelle atteint en décroissant ledit seuil inférieur de vitesse.

5. Procédé selon la revendication 4,
**caractérisé en ce que**, après blocage de l'inclinaison à cabrer dudit empennage horizontal réglable, ce dernier peut être librement commandé dans le sens à piquer.

6. Procédé selon l'une quelconque des revendications 1 à 5,
**caractérisé en ce que** ledit seuil de vitesse est choisi égal à ladite vitesse minimale VLS.

## Claims

1. A method for ensuring the safety of an aircraft (1) flying horizontally at low speed, close to the minimum speed VLS authorized for the actual configuration of the movable aerodynamic surfaces of its wings, the pitch control of the said aircraft (1) being obtained by action of the pilot on the elevators (9) articulated on the tailplane (7) of the said aircraft, wherein:
- a lower speed threshold (S) is determined for the aircraft;
- the actual speed (V) of the said aircraft is measured; and
- the said actual speed (V) is compared with the said threshold (S) and, when the said actual speed (V) reaches the said threshold (S) in the decreasing direction, the diving command of the said aircraft (1) is limited to a load factor (fg) greater than 0g.

2. The method as claimed in claim 1, wherein the load factor (fg) resulting from the diving command limitation is within the range 0.3g to 0.7g.

3. The method as claimed in claim 2, wherein the load factor (fg) resulting from the diving command limitation is of the order to 0.5g.

4. The method as claimed in anyone of claims 1 to 3 for an aircraft whose said tailplane is adjustable in inclination, wherein the pitch-up inclination of the said adjustable tailplane is blocked at the value existing at the moment when the said actual speed of the aircraft reaches the said lower speed threshold in a decreasing direction.

5. The method as claimed in claim 4, wherein, after blocking the pitch-up inclination of the said adjustable tailplane, the latter can be freely controlled in the diving direction.

6. The method as claimed in anyone of claims 1 to 5, wherein the said speed threshold is chosen to be equal to the said minimum speed VLS.

## Patentansprüche

1. Verfahren zur Sicherung eines Flugzeuges (1), das sich im Horizontalflug mit niedriger Geschwindigkeit befindet, die nahe der kleinsten Geschwindigkeit VLS ist, die für die aktuelle Konfiguration der beweglichen aerodynamischen Flächen seiner Flügel zugelassen ist, wobei die Steuerung der Nicklage des Flugzeuges (1) durch die Betätigung der an der Höhenflosse (7) des Flugzeuges angelenkten Höhenruder (9) seitens des Piloten erfolgt,
**dadurch gekennzeichnet, dass** man:
- einen unteren Geschwindigkeitsgrenzwert (S) für das Flugzeug vorgibt;
- die aktuelle Geschwindigkeit (V) des Flugzeuges misst; und
- die aktuelle Geschwindigkeit (V) mit dem Grenzwert (S) vergleicht, und wenn die aktuelle Geschwindigkeit (V) bis auf den Grenzwert (S) abfällt, die Steuerung der abwärts gerichteten Nickbewegung des Flugzeuges (1) auf ein Lastvielfaches (fg) größer als 0g begrenzt.

2. Verfahren nach Anspruch 1,
**dadurch gekennzeichnet, dass** das Lastvielfache (fg), das aus der Begrenzung der Steuerung der abwärts gerichteten Nickbewegung resultiert, zwischen 0,3g und 0,7g liegt.

3. Verfahren nach Anspruch 2,
**dadurch gekennzeichnet, dass** das Lastvielfache (fg), das aus der Begrenzung der Steuerung der abwärts gerichteten Nickbewegung resultiert, in der Größenordnung von 0,5g liegt.

4. Verfahren nach einem der Ansprüche 1 bis 3, für ein Flugzeug, bei dem die Höhenflosse neigungsverstellbar ist,
**dadurch gekennzeichnet, dass** man die Aufwärtsneigung der verstellbaren Höhenflosse bei dem Wert blockiert, den sie zu dem Zeitpunkt aufweist, zu dem die aktuelle Geschwindigkeit auf den unteren Geschwindigkeitsgrenzwert abgefallen ist.

5. Verfahren nach Anspruch 4,
**dadurch gekennzeichnet, dass** die verstellbare Höhenflosse nach dem Blockieren ihrer Aufwärtsneigung frei kopflastig trimmend ausgelenkt werden kann.

6. Verfahren nach einem der Ansprüche 1 bis 5,
**dadurch gekennzeichnet, dass** der Geschwindigkeitsgrenzwert gleich der kleinsten Geschwindigkeit VLS gewählt ist.
